(19) Europäisches Patentamt / European Patent Office / Office européen des brevets

(11) **EP 1 783 468 B1**

(12) **EUROPÄISCHE PATENTSCHRIFT**

(45) Veröffentlichungstag und Bekanntmachung des Hinweises auf die Patenterteilung:
**23.12.2009 Patentblatt 2009/52**

(51) Int Cl.:
*G01J 3/18* (2006.01)   *G01J 3/28* (2006.01)
*G01J 3/06* (2006.01)   *G01J 3/02* (2006.01)

(21) Anmeldenummer: **07100392.5**

(22) Anmeldetag: **03.11.2001**

(54) **Verfahren zur Auswertung von Echelle-Spektren**

Method for the analysis of echelle spectra

Procédé d'analyse de spectres d'échelles

(84) Benannte Vertragsstaaten:
**AT BE CH CY DE DK ES FI FR GB GR IE IT LI LU MC NL PT SE TR**

(30) Priorität: **13.11.2000 DE 10055905**

(43) Veröffentlichungstag der Anmeldung:
**09.05.2007 Patentblatt 2007/19**

(62) Dokumentnummer(n) der früheren Anmeldung(en) nach Art. 76 EPÜ:
**01993819.0 / 1 336 084**

(73) Patentinhaber:
• **Gesellschaft zur Förderung der Analytischen Wissenschaften e.V.**
  **44139 Dortmund (DE)**
• **Gesellschaft zur Förderung angewandter Optik, Optoelektronik, Quantenelektronik und Spektroskopie e.V.**
  **12489 Berlin (DE)**

(72) Erfinder:
• **Florek, Stefan**
  **12526, Berlin (DE)**
• **Okruss, Michael**
  **14482, Potsdam (DE)**
• **Becker-Ross, Helmut**
  **12557, Berlin (DE)**

(74) Vertreter: **Weisse, Renate**
  **Bleibtreustrasse 38**
  **10623 Berlin (DE)**

(56) Entgegenhaltungen:
• **PELLETIER M J: "RAMAN SPECTROSCOPY USING AN ECHELLE SPECTROGRAPH WITH CCD DETECTION" APPLIED SPECTROSCOPY, THE SOCIETY FOR APPLIED SPECTROSCOPY. BALTIMORE, US, Bd. 44, Nr. 10, 1. Dezember 1990 (1990-12-01), Seiten 1699-1705, XP000169324 ISSN: 0003-7028**

EP 1 783 468 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**EP 1 783 468 B1**

**Beschreibung**

**Technisches Gebiet**

Die Erfindung betrifft ein Echelle-Spektrometer nach dem Oberbegriff des Anspruchs 1. Die Erfindung betrifft weiterhin ein Verfahren zur Wellenlängenkalibrierung von Echellespektren, bei denen sich die Wellenlängen auf eine Mehrzahl von Ordnungen verteilen.

**Stand der Technik**

Es ist bekannt, hochaufgelöste Spektren mittels Echelle-Spektrometern zu erzeugen, bei denen sich der Wellenlängenbereich auf eine Vielzahl von Ordnungen verteilt. Die Ordnungen werden quer zur Dispersionsrichtung des Echellegitters (Hauptdispersionsrichtung) mittels eines weiteren Dispersionselementes getrennt. Beispiele solcher Anordnungen sind in dem Aufsatz "Adaptation of an echelle spectrograph to a large CCD detector" von S. Florek, H. Becker-Roß, T. Florek in Fresenius J. Anal. Chem. (1996) 355, Seiten 269-271 beschrieben. Hier wird ein Echelle-Gitter verwendet, bei welchem sich die interessierenden Wellenlängen des UV/VIS-Bereichs etwa in 80ter Ordnung befinden.

Bei diesen Spektrometern wird ein kleiner Spektralbereich aus dem Spektrum eines Spektrometers niedriger Auflösung mittels eines Austrittsspalts ausgewählt und mittels Diodenzeilen oder dergleichen detektiert. Bei der punktweisen Aufnahme der Spektren ist man entweder auf eine gewisse Anzahl von Punkten oder Spektralbereichen begrenzt, die mit jeweils zugehörigen Detektoren erfasst werden, oder das Spektrum wird durch Drehung von Gitter und/oder Prisma auf den Detektor geschoben.

Neuere Spektrometer sind mit Flächendetektoren ausgestattet. Diese ermöglichen die simultane Aufnahme des gesamten Spektrums oder zumindest großer Bereiche davon. Bei der Verwendung derartiger Flächendetektoren ist es wichtig, eine eindeutige Zuordnung der Pixelposition zu einer Wellenlänge zu kennen und möglichst das gesamte Licht einer Wellenlänge für das Spektrum zu erfassen. Durch Veränderungen des Spektrometers aufgrund von Temperaturschwankungen, Erschütterungen und dergleichen wird diese Zuordnung jedoch gestört. Weiterhin verteilt sich das Licht einer Wellenlänge üblicherweise auf mehrere Pixel, deren Intensitäten aufaddiert werden müssen, um ein Spektrum mit gutem Signal-Rauschverhältnis zu erhalten. Dabei muß berücksichtigt werden, daß die Ordnungen nicht exakt gerade, sondern leicht gekrümmt, nicht parallel und nicht äquidistant auf dem Detektor verlaufen.

Die Bestimmung dieser sogenannten Binning-Bereiche zur Ermittlung des Intensitätswertes für jeweils eine Spektrallinie kann also nicht nur durch die Bestimmung der Höhe des Spaltbildes in Querdispersionsrichtung erfolgen, sondern muß die Krümmung der Ordnungen berücksichtigen. Diese hängt insbesondere von der Ausgestaltung der Spektrometergeometrie und den Eigenschaften der optischen Komponenten ab und ist durch exakte Berechnung des geometrischen Strahlverlaufs nur mit großem Aufwand zu bestimmen. Die rechnerische Bestimmung der Ordnungskrümmung berücksichtigt zudem keine Driften oder sonstige Veränderungen der Linienpositionen in der Austrittsebene aufgrund von Umwelteinflüssen.

Die Kalibrierung des Spektrums mit absoluten Zuordnungen der Wellenlängen zu den Intensitätswerten erfordert ebenfalls einen erheblichen Zeitaufwand, wenn sie manuell erfolgt, da sich die interessierenden Wellenlängen auf eine Vielzahl von Ordnungen verteilen und daher nicht immer reproduzierbar eine exakte Zuordnung der Wellenlänge zu einem Pixel möglich ist.

Aus der DD 260 326 ist es bekannt, die optischen Komponenten eines EchelleSpektrometers derart anzuordnen, daß eine nachträgliche Justage beim Geräteaufbau möglich ist. Diese Justage dient der Korrektur von Toleranzen, die bei der Herstellung der optischen Komponenten üblicherweise auftreten. Die Herstellung der Komponenten kann daher mit größeren Toleranzen erfolgen, wodurch die Kosten gesenkt werden. Eine regelmäßige Kompensation von Drift oder dergleichen ist nicht vorgesehen, da diese viel Zeit in Anspruch nehmen würde.

Die Geräte des Standes der Technik wurden üblicherweise in klimatisierten Labors verwendet, wo die mit Temperaturschwankungen einhergehende Drift üblicherweise klein ist, oder es wurde eine passive Kompensation der Drift durch zum Beispiel Thermostatisierung verwendet. Die Anwendung von Spektrometern außerhalb solcher Labors ist entweder unmöglich oder erfordert einen erheblichen Aufwand um eine Stabilisierung zu erreichen.

**Offenbarung der Erfindung**

Es ist Aufgabe der Erfindung, ein Echelle-Spektrometer und ein Verfahren zu schaffen, mit welchem auf einfache und automatisierbare Weise eine eindeutige Zuordnung von Wellenlängen zu jedem Ort in der Austrittsebene ermittelt werden kann.

Erfindungsgemäß wird die Aufgabe gelöst durch das Kennzeichen des Anspruchs 1 und 9. Es hat sich herausgestellt, daß so eine Automatisierung der Wellenlängenkalibrierung möglich ist. Überraschenderweise ist die vorläufige Wellenlängenskala für die benachbarte Ordnung nach Schritt (e) ausreichend, um Referenzlinien zu identifizieren und damit eine hochgenaue Wellenlängenskala zu bestimmen. Dadurch kann sukzessive für jede Ordnung aus einer so ermittelten vorläufigen Wellenlängenskala eine hochgenaue Wellenlängenskala bestimmt werden. Diese genaue Wellenlängenskala stellt dann wiederum die Grundlage für die Berechnung einer vorläufigen Wellenlängenskala der nächsten Ordnung dar und so fort.

Das Referenzspektrum kann sich aus den Linenspektren mehrerer Referenzstrahler zusammensetzen. Dann stehen mehr Linien zur Verfügung, mit denen die Kalibrierung vorgenommen werden kann. Die Referenzstrahler können gleichzeitig in das Spektrometer eingekoppelt werden. Die Referenzspektren der Referenzstrahler können auch nacheinander eingestrahlt und zu einem Referenzspektrum aufaddiert werden.

Das Referenzspektrum kann zum Beispiel die Edelgaslinien wenigstens einer Pen-Ray-Lampe und/oder die Linien einer Platin-Hohlkathoden-Lampe umfassen. Diese Lampen haben ein linienreiches Spektrum. Je nachdem in welchem Bereich des Spektrums gearbeitet werden soll, können aber auch andere Referenzspektren verwendet werden oder auch die Absorptionslinien in einem kontinuierlichen Spektrum.

Das Referenzspektrum kann die Komponenten der Natrium-Doppellinie bei 583 nm umfassen, welche als erste Linien bei Schritt (c) dienen könne. Die Natrium-Linien sind aufgrund ihrer Farbe, Intensität und Verteilung den meisten Spektroskopikern gut bekannt und daher auf dem Detektor leicht zu identifizieren. Es können aber auch andere Linien als erste Linien verwendet werden, wie zum Beispiel die Hg-Linie bei 253 nm.

Vor der Kalibrierung in Schritt (b) wird vorzugsweise eine Untergrund-Korrektur bezüglich breitbandigem Untergrund durchgeführt. Dies hat den Vorteil, daß auch die relativen Intensitäten der Linien bei der Identifizierung berücksichtigt werden können. Die Untergrundkorrektur umfasst in einer Ausgestaltung der Erfindung folgende Schritte:

(a1) Glätten der aufgenommenen Spektralkurve

(a2) Bestimmen aller Werte der ursprünglichen Kurve, deren Wert über dem Wert der geglätteten Kurve liegt, und Reduzierung dieser Werte auf den Wert der geglätteten Kurve,

(a3) wenigstens zweifaches Wiederholen der Schritte (a1) bis (a2),

(a4) Subtraktion der auf diese Weise erhaltenen Untergrundkurve von der ursprünglichen Kurve.

Bei der geglätteten Kurve sind die Peaks üblicherweise flacher und breiter. Wenn die Werte, die über der geglätteten Kurve liegen, auf den Wert der geglätteten Kurve gesetzt werden und dieser Vorgang mehrfach wiederholt wird, verschwinden die Peaks nach einiger Zeit und übrig bleibt lediglich der breitbandige Untergrund, der dann von der ursprünglichen Kurve subtrahiert werden kann. Der breitbandige Untergrund kann von nichtaufgelösten Rotations-Schwingungs-Banden von Molekülen, durch Streulicht oder sonstigen quasi-kontinuierlichen und kontinuierlichen Strahlungsquellen herrühren. Die Höhe und Breite der Peaks, die diesem Untergrund überlagert sind, wird durch diese Art der Korrektur nicht beeinflusst.

Das Glätten der Kurve erfolgt bevorzugt mittels moving average. Dies ist ein Verfahren, bei dem jeder Intensitätswert I an einer Stelle x des Spektrums durch den Mittelwert $I_{mittel}$ ersetzt wird. Der Mittelwert $I_{mittel}$ wird aus den Intensitätswerten an der Stelle x und den umgebenden Stellen $x \pm 1$, $x \pm 2$, $x \pm 3$ etc. gebildet. Dadurch wird im allgemeinen hochfrequentes Rauschen geglättet und die Peaks in einer Kurve flacher und breiter. In einer Ausgestaltung des Verfahrens beträgt die Breite des moving average das Doppelte einer durchschnittlichen Linienbreite einer Referenzlinie.

Die Lage der Peaks des Referenzspektrums insbesondere in Schritt (b) können bestimmt werden durch die Schritte

(b1) Festlegen eines Schwellenwerts,

(b2) Bestimmen der Maxima aller Kurvenverläufe oberhalb des Schwellenwerts,

(b3) Auswahl der Maxima, deren Nachbarpixel Peakflanken bilden, die auf beiden Seiten des Maximums monoton auf einen vorgegebenen Prozentsatz des Maximums abfallen, und

(b4) Bestimmen der Peakschwerpunkte als Lage derjenigen Peaks, deren Maxima nach (b3) ausgewählt wurden.

Es sind auch andere Peakfinding-Prozeduren bekannt, die ebenfalls angewendet werden können. Es hat sich jedoch herausgestellt, daß das hier beschriebene Verfahren bei geeigneter Auswahl der Schwellenwerte und sonstigen Kriterien eine vollständige Automatisierung des Verfahrens ohne großen Aufwand ermöglicht. Zur Kalibrierung ist es nämlich ausreichend eine bestimmte Zahl Peaks zu finden, ohne daß Peaks mit vergleichsweise geringer Intensität verwendet werden müssen.

Ordnung, Intensität, Schwerpunkt, Maximum und Linienbreite der gefundenen Peaks können in einer Datei gespeichert werden. Dann kann die Kalibrierung jederzeit verwendet werden.

Vorzugsweise liegen die bekannten ersten Linien in einer mittleren Ordnung. Die Ordnung der bekannten ersten Linien kann aus der Gitterkonstanten des Echellegitters bestimmt werden. In einer Ausgestaltung der Erfindung werden Linien mit schlechten Fitparametern nicht berücksichtigt. Die Fitfunktion kann ein Polynom sein, zum Beispiel zweiten oder dritten Grades. Dann wird die Wellenlängenskala in Form der Fitparameter abgespeicherbar. Sie kann aber auch in Form von Datensätzen abgespeichert werden.

In einer besonders bevorzugten Ausgestaltung der Erfindung werden korrespondierende Fitparameter jeder Ordnung durch eine sekundäre Fitfunktion beschrieben. Dies basiert auf der Erkenntnis, daß sich die Wellenlängenskala nicht abrupt sondern kontinuierlich ändert. Die Fitparameter können sich demensprechend auch nicht abrupt ändern und können daher mittels einer sekundären Fitfunktion beschrieben werden. Die Wellenlängenskala für das komplette 2-dimensionale Echellespektrum kann in Form von wenigen sekundären Fitparametern gespeichert werden. Alternativ kann die Wellenlängenskala als Datensatz gespeichert werden. Dies bietet sich insbesondere dann an, wenn immer nur bestimmte Wellenlängen betrachtet werden.

Ausgestaltungen der Erfindung ergeben sich aus den Unteransprüchen. Ausführungsbeispiele sind nachstehend unter Bezugnahme auf die beigefügten Zeichnungen näher erläutert.

**Kurze Beschreibung der Zeichnungen**

Fig.1          zeigt schematisch den Aufbau eines Echellespektrometers mit einem Prisma in Littrow-Anordnung

Fig.2          zeigt eine Seitenansicht eines Echelle-Gitters

Fig.3          ist eine Draufsicht auf den Strahlengang in dem Echellespektrometer aus Fig.1

Fig.4          zeigt schematisch die Ordnungen eines kontinuierlichen Spektrums auf einem Flächendetektor

Fig.5          ist eine Detaildarstellung des Gitteraufbaus

Fig.6          ist eine Detaildarstellung des Aufbaus des Prismas mit Kompensator

Fig.7          ist eine Detaildarstellung des Aufbaus des Kameraspiegels in Seitenansicht

Fig.8          ist eine Detaildarstellung des Aufbaus des Kameraspiegels in Vorderansicht

Fig.9          ist eine Detaildarstellung des Detektoraufbaus in Vorderansicht

Fig. 10        ist eine Darstellung der Lage der Linien bei veränderlicher Temperatur bei Stabilisierung einer Linie

Fig. 11        ist eine Darstellung der Lage der Linien bei veränderter Temperatur bei Stabilisierung aller Stellgrößen

Fig. 12        zeigt die gekrümmten Ordnungen eines kontinuierlichen Spektrums und eine ausgewählte Spalte

Fig. 13        zeigt den Intensitätsverlauf entlang der ausgewählten Spalte in Fig. 12

Fig. 14        zeigt die Fitfunktionen für die Minima zwischen den Ordnungen

Fig. 15        zeigt das Echelle-Spektrum eines Linienstrahlers

Fig.16(a)-(e)  zeigt die Intensität entlang einer Ordnung und zunehmend geglättete Funktionen mit denen eine Untergrundkorrektur durchgeführt wird.

Fig. 17a       zeigt die Intensität entlang einer Ordnung und den berechneten Untergrund

Fig. 17b       zeigt die Untergrund-korrigierte Intensität entlang einer Ordnung

Fig. 18       zeigt ein Echelle-Spektrometer nach einem anderen Ausführungsbeispiel

**Beschreibung der Ausführungsbeispiele**

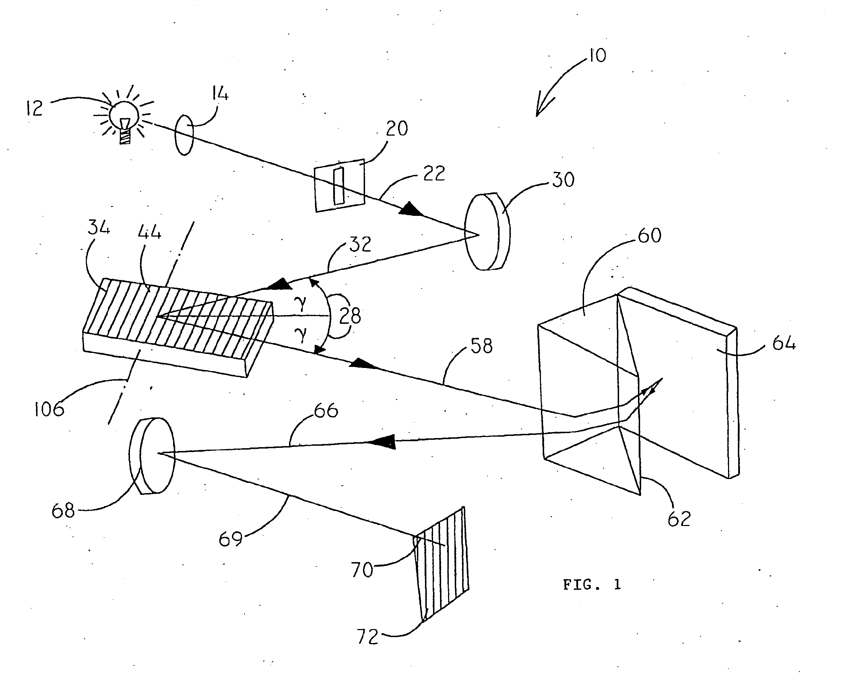

In Fig.1 ist ein erfindungsgemäßes Echelle-Spektrometer 10 schematisch dargestellt. Das Licht einer Lichtquelle 12 wird mittels einer Linse 14 oder eines Spiegels auf einen Eintrittsspalt 20 fokussiert. Die optische Achse wird durch eine Linie 22 in Fig.1 dargestellt. Das Licht tritt durch den Eintrittsspalt 20 und wird mittels eines sphärischen Konkav-Spiegels 30 parallelisiert. Das parallele Bündel 32 trifft anschließend auf ein Echelle-Gitter 34, wo es dispergiert wird. Die Gitterfurchen 44 verlaufen horizontal. Die Dispersion erfolgt senkrecht zu den Gitterfurchen, d.h. vertikal in Fig.1.

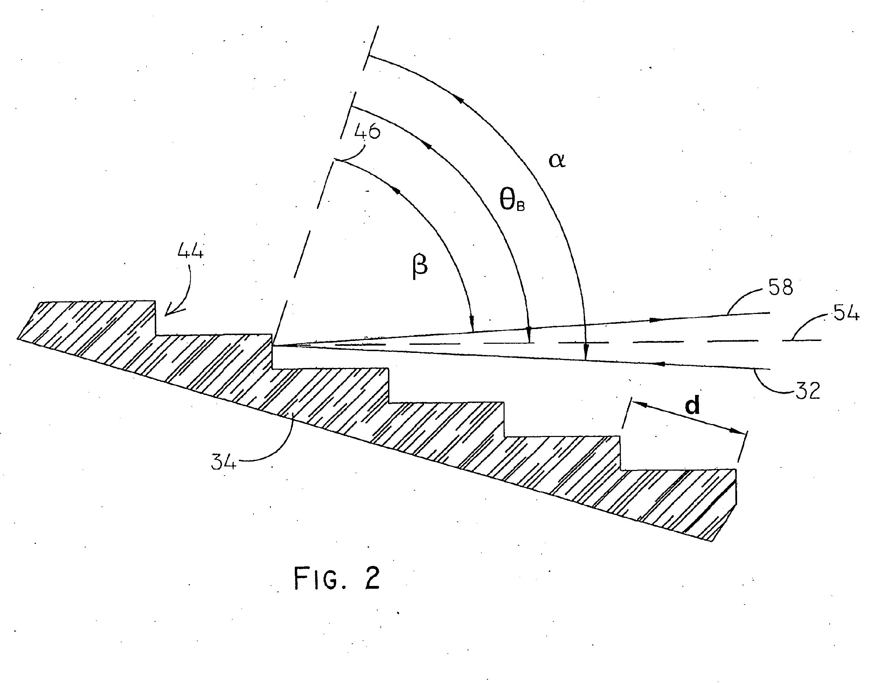

In Fig.2 ist das Echelle-Gitter 34 nochmals im Detail dargestellt. Der Abstand der Gitterfurchen ist mit d bezeichnet. Der Winkel des einfallendes Strahls 32 mit der Senkrechten 46 auf das Gitter ist mit $\alpha$ bezeichnet. Der Winkel des gebeugten Strahls 58 mit der Senkrechten 46 auf das Gitter ist mit $\beta$ bezeichnet. $\theta_B$ bezeichnet den BlazeWinkel der Furchen 44 des Echelle-Gitters 34.

Das parallele Lichtbündel 32 in Fig.1 fällt bezogen auf die Dispersionsebene unter einem sehr flachen Winkel auf das Echelle-Gitter 34. Der Winkel entspricht annähernd 90 Grad minus dem Blazewinkel des Echelle-Gitters.

Durch einen hohen Blazewinkel wird die Intensität des Beugungsbildes auf hohe Beugungsordnungen in einem typischen Bereich zwischen dreißigster und hundertdreißigster Ordnung für die zu messenden Wellenlängen konzentriert. Ein großer Beugungswinkel, der im vorliegenden Fall 76 Grad beträgt, bewirkt eine hohe Dispersion. Das Echelle-Gitter 34 hat eine geringe Strichzahl von 75 Strichen pro Millimeter, um für Wellenlängen im Bereich von 190 nm bis 852 nm eine möglichst hohe Winkeldispersion zu erreichen. Typischerweise werden Strichzahlen von 25 bis 250 Striche pro Millimeter verwendet. Durch den großen Einfallswinkel muß das Gitter 34 entsprechend lang sein, wenn die gesamte Strahlung auf das Gitter auftreffen soll.

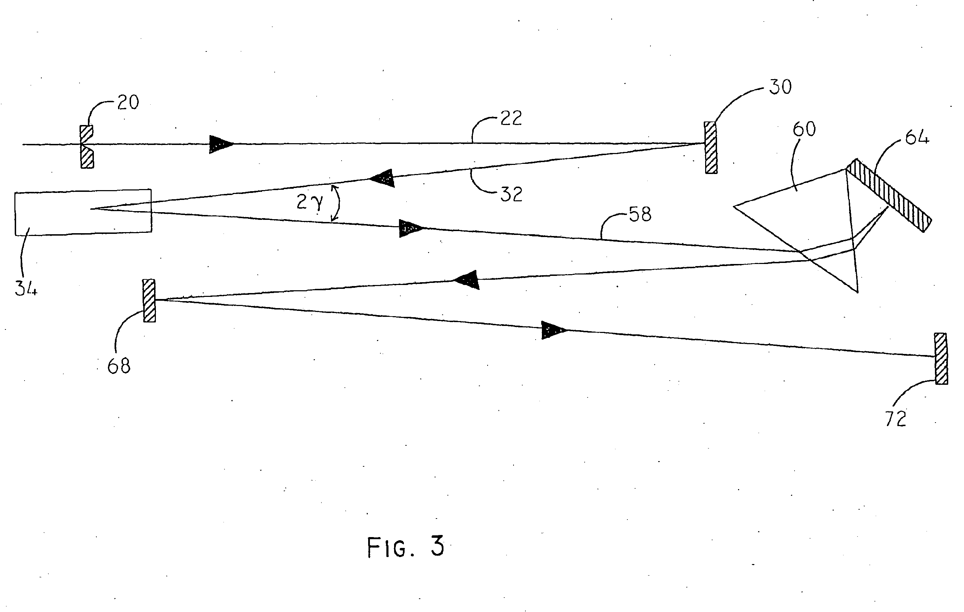

Das parallele Bündel 32 fällt bezogen auf eine Ebene senkrecht zu den Gitterfurchen unter einem Winkel 2 $y$, dem sogenannten off-plane Winkel, auf das Gitter 34. Dieser ist in Fig.3 nochmal deutlicher dargestellt. Dort wird das Bündel in der Ebene parallel zu den Gitterfurchen 44 reflektiert und in der dazu senkrechten Dispersionsebene gebeugt.

Der reflektierte und dispergierte Strahl 58 wird durch ein Prisma 60 mit Dachkante 62 gelenkt. In Fig. 1 und drei verläuft die Dachkante 62 des Prismas 60 senkrecht. Der Strahl 58 wird in dem Prisma 60 dispergiert, trifft dahinter auf einen Planspiegel 64 und wird zurück in das Prisma 60 reflektiert. Dort wird der Strahl erneut dispergiert. Entsprechend der senkrechten Dachkante 62 des Prismas 60 wird der Strahl zweifach in horizontaler Richtung, also senkrecht zur Gitterdispersionsrichtung (Hauptdispersionsrichtung) dispergiert (Querdispersion). Die in Hauptdispersionsrichtung überlappenden Ordnungen werden durch die im Vergleich zur Hauptdispersion erheblich geringere Querdispersion am Prisma 60 in einer Richtung senkrecht zur Hauptdispersionsrichtung auseinandergezogen und gekrümmt.

Nach der Fokussierung der für jeweils genau eine Wellenlänge parallelen Bündel 66 mittels eines weiteren sphärischen Konkav-Spiegels 68 erhält man somit einen fokussierten Strahl 69. Es entsteht ein zweidimensionales Spektrum 70 in der Austrittsebene 72.

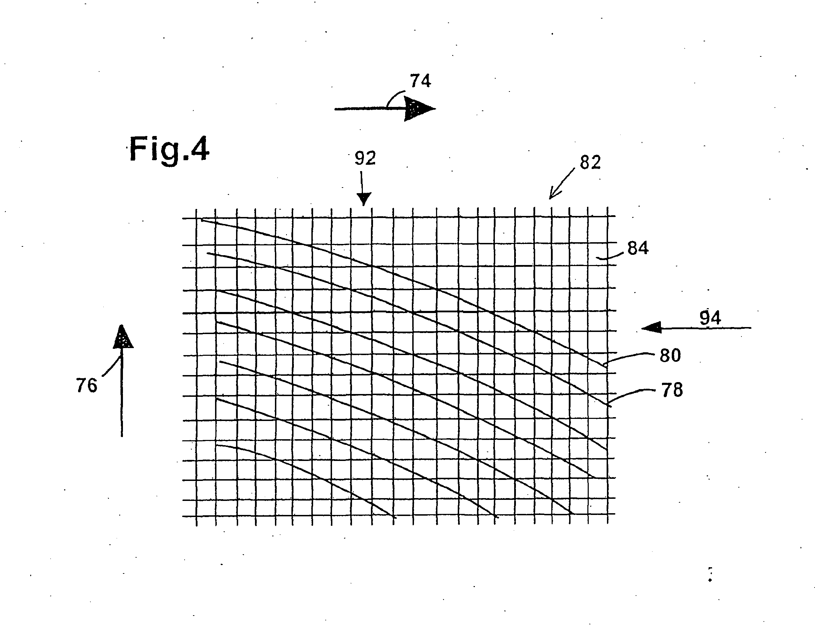

Ein typisches Spektrum eines kontinuierlichen Strahlers ist schematisch in Fig. 4 dargestellt. Die Wellenlängen verteilen sich in Hauptdispersionsrichtung in Richtung des Pfeils 74. Die verschiedenen Ordnungen werden in Querdispersionsrichtung, dargestellt durch Pfeil 76, auseinandergezogen. So liegt die 100.Ordnung 78, z.B. neben der 99.Ordnung, die mit 80 bezeichnet ist.

Ein Charged-Coupled-Device (CCD)-Detektor 82 üblicher Bauart ist in der Austrittsebene angeordnet. Der CCD-Detektor ist mit Bildelementen 84 versehen, welche in einem rechtwinkligen Raster in horizontalen Detektorzeilen 94 und vertikalen Detektorspalten 92 angeordnet sind. Der Detektor ist so ausgerichtet, daß die Detektorzeilen 94 im wesentlichen entlang den Beugungsordnungen des Echelle-Gitters 34 verlaufen. Durch die Prismendispersion sind die Beugungsordnungen 78, 80 jedoch leicht gekrümmt, nicht parallel und nicht äquidistant. In Fig. 4 ist dies zur besseren Veranschaulichung etwas übertrieben dargestellt.

Jedem Bildelement kann ein Paar (x, y) zugeordnet werden, das seine Lage eindeutig beschreibt. Der x-Wert entspricht der x-ten Detektorspalte von links aus gesehen und der y-Wert entspricht der y-ten Detektorzeile von unten aus gezählt.

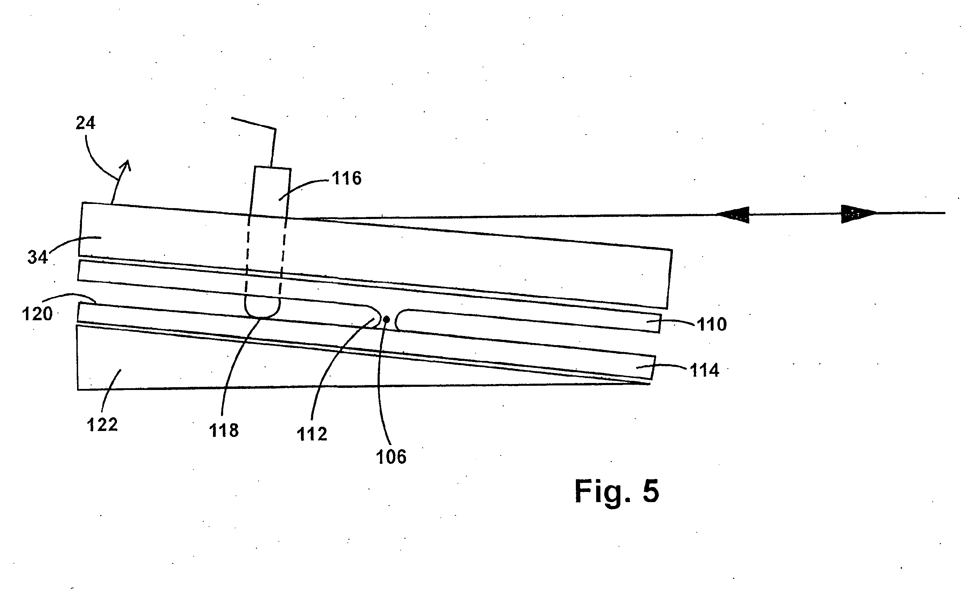

Das Gitter 34 ist um eine Achse 106 beweglich, die parallel zu den Gitterfurchen 44 verläuft. Die Achse 106 verläuft entlang einer Biegestelle 112 (s. Fig.5). Die Biegestelle 112 verbindet eine obere Metallplatte 110 mit einer unteren Metallplatte 114. Das Gitter 34 liegt auf der oberen Metallplatte 110 auf und ist auf ihr aufgeklebt. Die untere Metallplatte 114 liegt auf einem Keil 122 auf, dessen Winkel im wesentlichen 90 Grad minus dem Blazewinkel des Gitters entspricht. Ein Piezoelement 116 ragt seitlich vom Gitter durch die obere Metallplatte 110 und übt mit seinem Ende einen Druck auf die untere Metallplatte 114 aus.

Wenn die Spannung an dem Piezoelement 116 erhöht wird, dehnt es sich aus und der Druck auf die untere Metallplatte 114 wird erhöht. Dadurch wird das Gitter weiter in Richtung des Pfeils 124 verkippt. Bei Verringerung der Spannung erfolgt dementsprechend eine Drehung des Gitters in entgegengesetzter Richtung.

In einem nicht dargestellten Ausführungsbeispiel erfolgt die Drehung mittels eines rechnergesteuerten Schrittmotors und einer damit verbundenen Feinspindel. Mit der Drehung des Gitters 34 erfolgt die Verschiebung einer Linie einer ausgewählten Wellenlänge im wesentlichen in Richtung der Hauptdispersion in der Austrittsebene, also in Richtung des Pfeils 74 in Fig.4 beziehungsweise in der dazu entgegengesetzten Richtung.

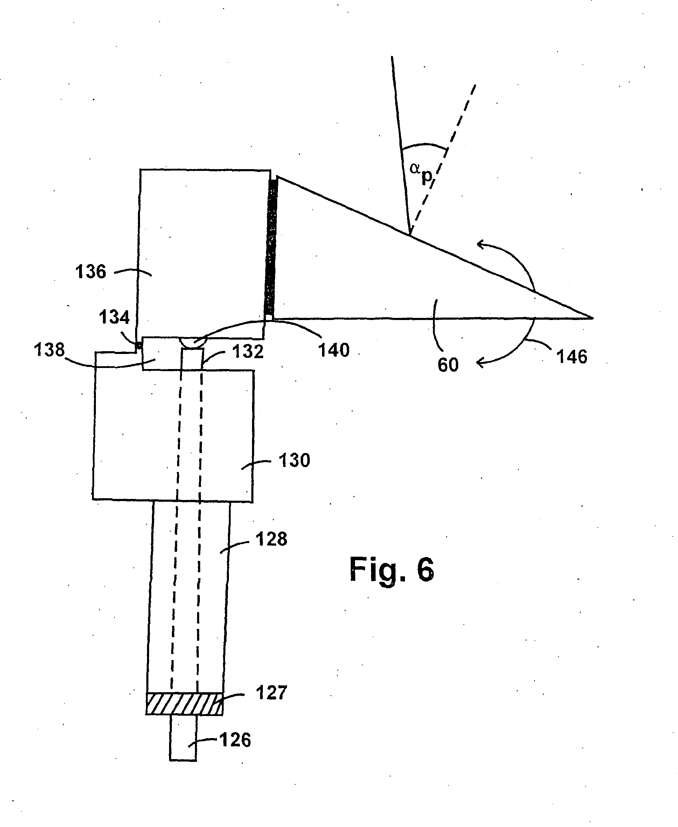

In Fig.6 ist die Prismenanordnung dargestellt. Ein Messingstab 126 ist an dem Befestigungspunkt 127 mit einem Invargehäuse 128 verbunden. Das Invargehäuse 128 ist an einem Metallgehäuse 130 befestigt. Der Messingstab 126 erstreckt sich durch das Metallgehäuse 130 und ragt mit seinem freien Ende 132 darüber hinaus. Das mit dem mechanischen Aufbau des Spektrometers fest verbundene Metallgehäuse 130 ist über eine Biegestelle 134 mit einem Metallblock 136 verbunden. An dem Metallblock ist das Prisma 60 angeklebt. Wenn sich die Umgebungstemperatur erhöht erhöht, sich die Prismendispersion. Bei einer Temperaturerhöhung dehnt sich aber auch der Messingstab 126 aus. Das Invargehäuse 128 dehnt sich aufgrund der Eigenschaften von Invar nicht oder nur vernachlässigbar aus. Durch die Ausdehnung des Messingstabs wird ein Druck auf einen Druckpunkt 140 an der Oberfläche des Metallblocks 136 ausgeübt. Der Abstand 138 des Metallgehäuses 130 vom Metallblock 136 verändert sich dann an dieser Stelle derart, daß eine Drehung des Metallblocks 136 um die Biegestelle erfolgt. Dabei bildet die Biegestelle 134 die Drehachse. Durch die Drehung des Metallblocks 136 wird auch das daran befestigte Prisma 60 gedreht und zwar in der Art, daß sich der Einfallswinkel $\alpha p$, und damit die Dispersion verringert. Bei geeigneten Abmessungen der Komponenten der Anordnung kann die Dispersionsverringerung durch die Drehung gerade so gestaltet werden, daß sie die Dispersionserhöhung durch die Erhöhung der mit der Umgebungstemperatur gekoppelten Prismentemperatur gerade kompensiert.

In einem nicht dargestellten alternativen Ausführungsbeispiel ist das Prisma 60 um eine Achse parallel zur Dachkante 62 drehbar. Auch diese Drehung kann Schrittmotor-oder Piezo-gesteuert erfolgen. Das Prisma 60 wird dazu auf einem drehbaren Tisch befestigt. Durch eine Drehung des Prismas 60 wird neben der Änderung der Querdispersion die Verschiebung aller Ordnungen in Richtung des Pfeils 76 (Fig.3) beziehungsweise in der dazu entgegengesetzten Richtung bewirkt.

Am Kameraspiegel 68 sind zwei Piezokristalle vorgesehen, die über einen Computer und eine Spannungsversorgung angesteuert werden. Die Piezos sind derart am Kameraspiegel angebracht, daß dieser um zwei Achsen mittels der Piezos gedreht werden kann. Dadurch kann das gesamte Spektrum in der Austrittsebene ohne wesentliche Verzerrung in vertikaler und horizontaler Richtung verschoben werden.

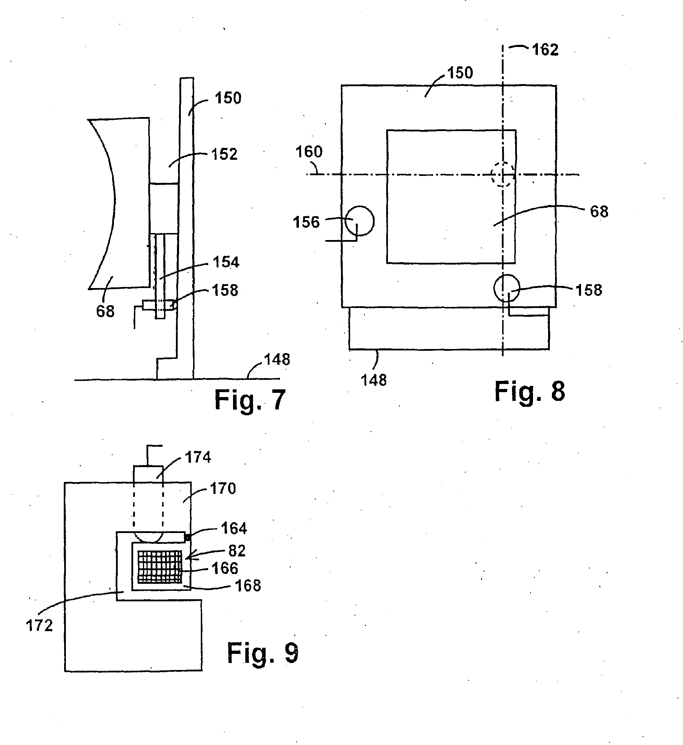

In Fig.7 und Fig.8 ist der Aufbau des Kameraspiegels 68 im Detail dargestellt. Auf der Grundplatte 148 des Spektrometers ist eine senkrechte Platte 150 angeschraubt. Der Kameraspiegel 68 ist mit seiner Rückseite beweglich an dieser Platte 150 angebracht, wobei zwischen der Rückseite des Kameraspiegels 68 und der Platte 150 ein Zwischenraum 152 vorgesehen ist. Eine weitere Platte 154 sitzt in diesem Zwischenraum 152 und ist mit einem in zwei zueinander senkrechten Richtungen beweglichen Gelenkelement mit der Platte 150 verbunden. Durch diese Platte 154 ragen zwei Piezoelemente 156 und 158. Die Piezoelemente 156 und 158 sind mit der Platte 154 fest verbunden. Wenn sich eines der Piezoelemente oder beide ausdehnen, wird ein Druck auf einen Druckpunkt auf der Oberfläche der senkrechten Platte 150 ausgeübt und die Platte 154 verkippt. Die Platte 154 liegt an der Rückseite des Spiegels 68 an. Es wird somit auch eine Verkippung des Spiegels bewirkt. Die Verkippung erfolgt im wesentlichen um eine horizontale Achse 160 (s. Fig. 8), wenn der Druck durch das Piezoelement 158 erfolgt und im wesentlichen um eine vertikale Achse 162, wenn der Druck durch das Piezoelement 156 erfolgt.

Der Flächendetektor 82 in der Austrittsebene 72 des Spektrometers ist ebenfalls drehbar gelagert. Dies ist in Fig. 9 dargestellt. Die Drehachse 164 steht senkrecht auf der Detektoroberfläche 166. Durch geeignete Anordnung eines weiteren Piezokristalls, der ebenfalls computergesteuert mit einer Spannung versorgt wird, kann der Detektor 82 um einen definierten Winkel gedreht werden.

Hierzu ist der Detektor 82 auf einem inneren Metallblock 168 angeordnet, der über eine Biegestelle, der mit der Drehachse 164 zusammenfällt, mit einem äußeren Metallblock 170 verbunden ist. Der äußere Metallblock 170 ist fest mit der Spektrometergrundplatte verbunden. Der äußere Metallblock 170 erstreckt sich auf drei Seiten um den inneren Metallblock herum, wobei zwischen den Blöcken ein Zwischenraum 172 gebildet wird. Durch den äußeren Metallblock 170 ragt ein Piezoelement 174, welches sich über den Zwischenraum 172 erstreckt und auf den inneren Metallblock 168 drückt. Der Druckpunkt zwischen Piezoelement 174 und innerem Metallblock 168 liegt in einem Abstand von der Biegestelle 164. Wenn sich das Piezoelement aufgrund einer Spannungsänderung ausdehnt/zusammenzieht, dann wird der innere Metallblock 168 mit dem darauf befindlichen Detektor um die Achse 164 gedreht.

Das Gerät unterliegt bei Temperatur- oder Druckschwankungen oder sonstigen Veränderungen der Geräte-Umgebung einer Drift, das heißt einer mechanischen Verschiebung bzw. Verdrehung aller optischen Bauelemente aus ihren Sollpositionen. Durch diese Drift werden die Spektrallinien am Detektor ggf. verschoben, verzerrt oder gedreht. Dabei kann sich auch der Abstand zwischen zwei Spektrallinien ändern.

Zur Ermittlung des Intensitätsverlaufs der Strahlung aus einer Lichtquelle 12 in Abhängigkeit von der Wellenlänge (Spektrum) wird das Gerät zunächst justiert. Dazu werden der Ordnungsverlauf und die Lage der Ordnungen mit einer Referenz verglichen.

Um die Spektrallinien im gesamten Spektralbereich mit einer Abweichung von weniger als einer Pixelbreite auf einer definierten Referenzposition zu halten, müssen die Stellelemente an Gitter, Prisma, Kameraspiegel und Detektor entsprechend regelmäßig nachjustiert werden. Bei einem klimatisierten Labor reicht im allgemeinen eine Justierung am Tag, während bei Anordnungen zum Beispiel draußen im mobilen Einsatz praktisch vor jeder Messung eine Justierung vorgenommen werden muß.

Es werden jeweils die Stellelemente bewegt, die den größten Effekt auf das Spektrum haben, unabhängig von der Ursache der ursprünglichen Verschiebung aus der Referenzlage. Die Ursache der Verschiebung ist oft auch nicht mehr feststellbar. Wenn sich zum Beispiel der Detektor aus seiner Lage linear verschoben hat, so wird trotzdem eine Justierung mittels der Piezoelemente am Kameraspiegel vorgenommen.

Bei der Geräteeinrichtung werden zunächst alle optischen Komponenten, d.h. Gitter, Kameraspiegel und Detektor in eine mittige Position gebracht. Dann wird eine Referenzlichtquelle, die über weite Bereiche des Spektrums Linienstrahlung emittiert, vor dem Eintrittsspalt des Spektrometers eingekoppelt und so justiert, daß auf dem Detektor scharfe Linien erscheinen. Als Referenzlichtquelle eignet sich zum Beispiel eine Edelgas-Pen-Ray-Lampe.

Die Lage der Spektrallinien in diesem Zustand wird dann als Referenzlage gespeichert. Dies geschieht in Form von x- und y-Werten zur Beschreibung des Detektorbildelements und der zugehörigen Intensität in relativen Einheiten. Es werden dann für jedes Stellelement und für jede Referenzlinie Stellgrößen-Kombinationen ermittelt, mit denen das Referenzspektrum erhalten wird. Die Stellgrößen-Kombinationen müssen experimentell ermittelt werden, da hier Herstellungstoleranzen, Abweichungen der Lage der Achsen von einem Gerät zum anderen und sonstige Unterschiede zwischen den korrespondierenden Komponenten verschiedener Spektrometer zu unterschiedlichen Stellgrößen-Kombinationen führen. Ist diese einmal ermittelt, so kann sie solange verwendet werden, wie die gleichen Bauteile verwendet werden.

Die Stellgrößen sind voneinander abhängig. Ist zum Beispiel der Abstand zweier Spektrallinien in einer Ordnung im Vergleich zu dem Abstand zwischen den gleichen Linien im Referenzspektrum zu groß, so kann dies nicht einfach mit einer Drehung des Gitters kompensiert werden. Eine Drehung des Gitters ist nämlich mit einer Verschiebung beider Linien verbunden, die dann widerum mit einer Kippung oder Drehung des Kameraspiegels kompensiert werden muß. Eine solche Drehung kann auch eine Drehung des gesamten Spektrums in der Austrittsebene bewirken. Diese wird dann durch Drehung des Detektors kompensiert.

Es existiert aber für jedes Spektrum ein Satz von Werten für die Stellgrößen, mit dem das Spektrum in die Referenzlage geschoben werden kann. Diese Zuordnung von Spektrallinienpositionen zu einem Satz von Werten für die Stellgrößen wird fest für jedes Spektrometer gespeichert und zur Justage verwendet. Die Stellgrößen sind im vorliegenden Fall: "Gitterwinkel", "horizontale Lage des Gesamtspektrums", "vertikale Lage des Gesamtspektrums" und "Detektorwinkel". Die Spektrallinienpositionen werden gekennzeichnet durch die Werte für x- und y-Position, Wellenlänge, Halbwertsbreite und Intensität der Spektralline. X und Y bezeichnen die Lage eines Bildelementes.

Zur Justage wird die Lage der Spektrallinien der Referenzlichtquelle bestimmt und mit dem gespeicherten Referenzspektrum verglichen. Danach werden die Stellelemente entsprechend der gespeicherten Zuordnung betätigt. In einem weiteren Schritt wird dann erneut die Lage der Spektrallinien geprüft. Liegen die Spektrallinien innerhalb eines vorgegebenen Intervalls um die Referenzlage, so befindet sich das Spektrometer im "Referenzzustand". Die Zuordnung ist aber möglicherweise nicht perfekt. Dies kann an Nichtlinearitäten liegen, oder daran, daß sich die Drehachsen nicht in ihrer optimalen Lage befinden. Dann liegen die Spektrallinien zwar näher an ihrer Referenzposition, aber nicht direkt darauf. Der Justiervorgang wird daher wiederholt, bis sich alle Spektrallinien an ihren Referenzpositionen befinden. Je nach Qualität der Zuordnungsvorschrift und der Stellelemente ist nur eine oder aber auch bis zu 100 Wiederholungen nötig. Danach befinden sich alle Spektrallinien in ihren Referenzpositionen. Das Spektrometer hat dann eine sehr genau definierbare Auflösung. Die Anordnung ist durch Rechnersteuerung auch zur "online"-Stabilisierung geeignet. Dabei wird in regelmäßigen kurzen Abständen eine Justierung vorgenommen.

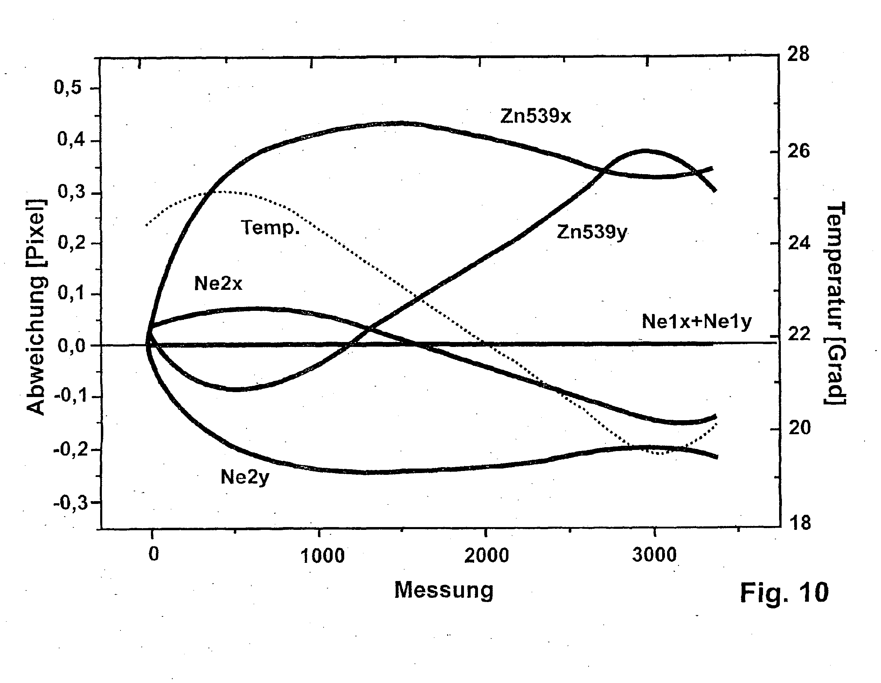

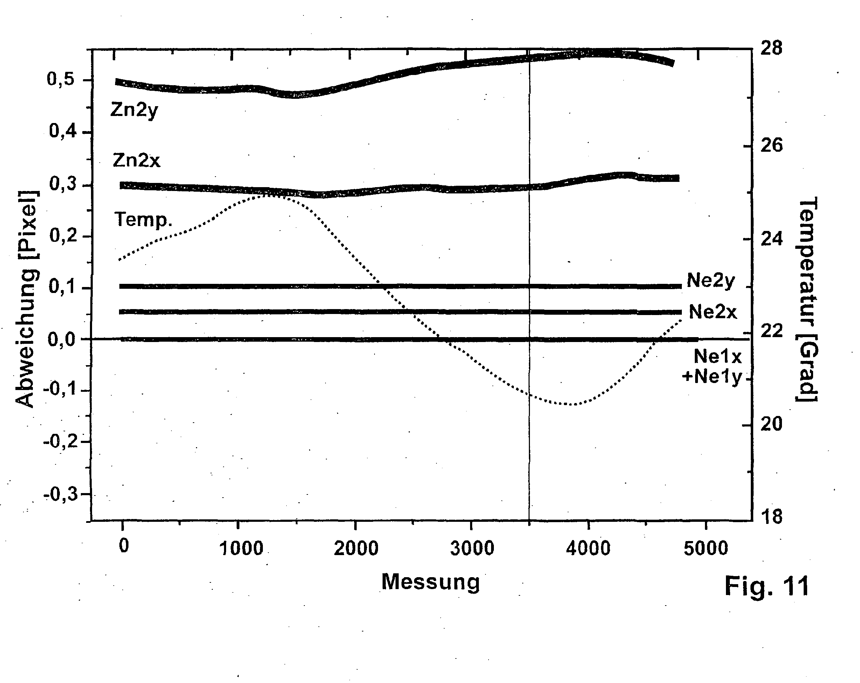

In Fig. 10 und Fig. 11 ist die Lageverschiebung verschiedener Spektrallinien bei veränderlicher Temperatur dargestellt. Es sind drei Spektrallinien dargestellt, von denen zwei (Ne1, Ne2) in zwei benachbarten Ordnungen jeweils am Ordnungsende liegen, während die dritte (Zn2) in einer dritten Ordnung in der Ordnungsmitte liegt. In Fig. 10 wurde nur die erste Neonlinie, die mit Ne1 bezeichnet ist, stabilisiert, d.h. es wurde nur die Translation des Spektrums über die beiden Piezoelemente am Kameraspiegel kompensiert. In Fig.11 ist die gesamte Stabilisierung aktiv, d. h. zusätzlich die Piezoelemente am Gitter und am Detektor und der passive Prismenkompensator. Man erkennt deutlich, daß die Linien erheblich weniger driften als ohne Stabilisierung. Die Nullpositionen für Ne2x, Ne2y, Zn2x und Zn2y sind zur besseren Übersicht jeweils parallelverschoben dargestellt.

Um ein möglichst gutes Signal-Untergrund-Verhältnis im Spektrum zu erhalten werden die Intensitäten derjenigen Detektorelemente, die mit Licht der gleichen Wellenlänge bestrahlt werden, aufaddiert (Binning). Dazu werden zunächst die zusammengehörigen Detektorelemente bestimmt. Diese "Binningbereiche" verlaufen jeweils etwa senkrecht zu den Ordnungen, die aufgrund der Prismendispersion gekrümmt sind.

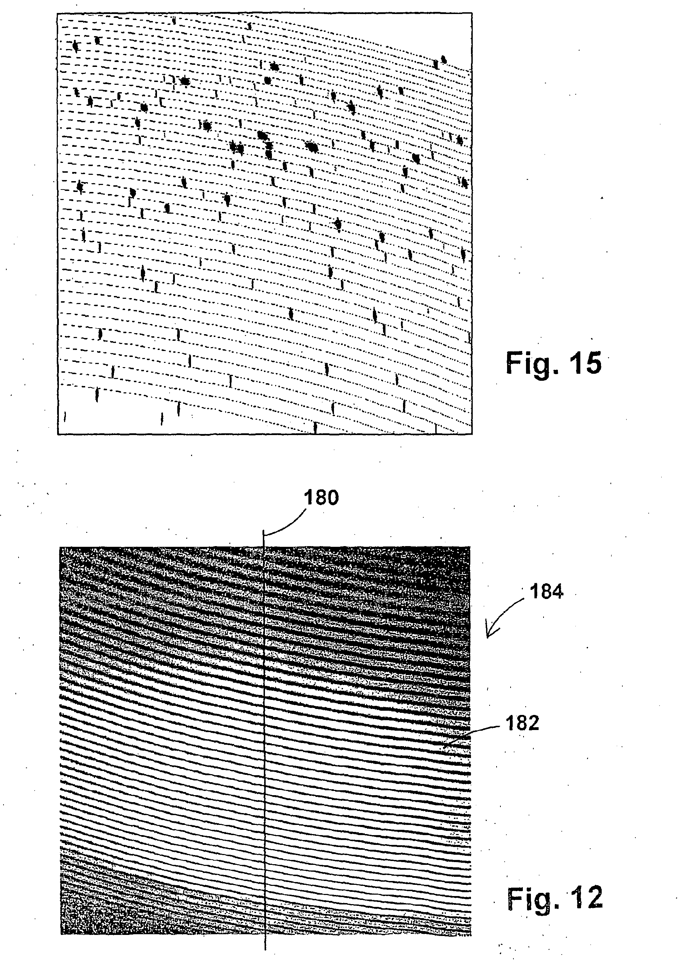

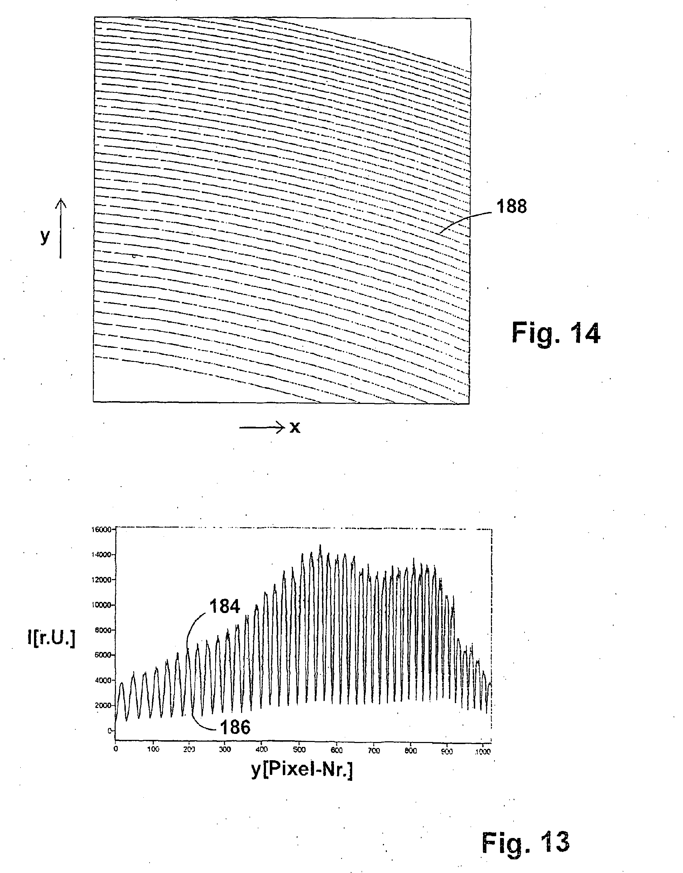

Zunächst wird eine Detektorspalte 180 etwa in der Mitte des Detektors 184 ausgewählt, die im wesentlichen quer zu den Ordnungen 182 verläuft (Fig.12). Wenn die Ordnungen im wesentlichen entlang der Spalten verlaufen, wird eine Detektorzeile ausgewählt. Das Licht eines Kontinuum-Strahlers, welcher ein kontinuierliches Spektrum über den gesamten betrachteten Bereich ausstrahlt, wird in das Spektrometer eingekoppelt und die Intensitäten I auf den Detektorelementen der Detektorspalte 180 ermittelt. Der Intensitätsverlauf in Abhängigkeit vom y-Wert entlang der Detektorspalte ist in Fig. 13 dargestellt.

Die Ordnungsmitten liegen in etwa an den Maxima 184, die Minima 186 stellen die Mitten zwischen den Ordnungen dar. Um die Binning-Bereiche zu ermitteln, muß zunächst der genaue Ordnungsverlauf jeder interessierenden Ordnung ermittelt werden. Dies kann durch Beschreibung der Minima zwischen den Ordnungen oder durch Beschreibung der Maxima erfolgen. Die Minima sind im vorliegenden Fall schärfer ausgeprägt als die Maxima und werden daher ausgewählt. Bei großer Ordnungstrennung sind die Maxima besser geeignet.

Als nächster Schritt werden die Detektorelemente bestimmt, auf denen die Intensität lokale Minima aufweist. Diese stellen die Mitten zwischen den Ordnungen dar. In Fig. 13 sind das die y-Werte bei y=32, 66, 98...1010. Diese Werte stellen zusammen mit dem x-Wert der Detektorspalte die Startwerte für die verschiedenen Ordnungen dar.

Als nächstes muß der Verlauf des Minimums entlang der Ordnung verfolgt und beschrieben werden. Hierzu wird ausgehend von einem lokalen Minimum $(X_S, Y_{m,\,min})$ als Startwert das nächste Detektorelement $(x_S+1, y_m)$ entlang der jeweiligen Ordnung sowie ein Detektorelement darüber und darunter $(x_s+1, y_m\pm 1)$ ausgewählt. Das Bildelement dieser drei Bildelemente mit der geringsten Intensität wird als Minimum zwischen den zwei betrachteten Ordnungen für diese benachbarte Detektorspalte angenommen. Es dient wiederum als Ausgangswert für die Auswahl der nächsten drei benachbarten Bildelemente aus denen wiederum dasjenige mit der geringsten Intensität ausgewählt wird. Der Vorgang wird auf beiden Seiten der ursprünglichen Spalte für jede Ordnung wiederholt, bis für jede Spalte alle Minima bestimmt sind. Die Gesamtheit aller ausgewählten Bildelemente verläuft dann entlang des Minimums zwischen zwei Ordnungen. Drei Pixel sind für die Bestimmung der Minima ausreichend, da keine Sprünge im Verlauf der Ordnungen vorkommen.

Der Verlauf des Minimums zwischen zwei Ordnungen wird dann mittels einer FitFunktion, z.B. einem Polynom zweiter oder dritter Ordnung, das durch die ausgewählten Minima verläuft, beschrieben. Dadurch erreicht man die Kompensation von Digitalisierungseffekten, die daher kommen, daß die Ortsverteilung des Minimums in Sprüngen verläuft. Der Grad des Polynoms hängt vom Grad der Kürmmung ab und beträgt 2 oder 3. Bei dem beschriebenen Spektrum ist ein Polynom 2.Grades angemessen. Es lautet dann

$$y_{\min}(x) = a_0 + a_1 x + a_2 x^2$$

wobei die Koeffizienten $a_0, a_1$, und $a_2$ die Fit-Parameter darstellen und x die Spaltenzahl. Dieser Vorgang wird für jede Ordnung wiederholt, bis alle Ordnungen durch Polynome mit festen Koeffizienten beschrieben sind. Das Resultat dieser Fit-Prozedur ist in Fig. 14 dargestellt. Dort sind die Fit-Funktionen 188 y(x) für alle interessierenden Ordnungen dargestellt.

Die Binning-Bereiche sind dann alle Detektorelemente einer Spalte zwischen je zwei benachbarten gefitteten Funktionen. Die Funktionen können auch nichtganzzahlige Werte annehmen. Dann werden die Funktionen über die Breite eines Detektorelements auf seinen Mittenwert festgelegt. Die Intensität an diesem Detektorelement wird entsprechend beim Binning nur anteilig berücksichtigt. Dadurch wird der Digitalisierungseffekt, der beim Binning gewöhnlich auftritt, kompensiert.

Es ergibt sich eine Funktionenschar, die als solche in Form der Koeffizienten abgespeichert werden kann. Im vorliegenden Fall wurde aber auch die Funktionenschar gefittet durch einen sekundären Fit der Koeffizienten. Hierzu wurden die Koeffizienten dargestellt durch eine Matrix:

$$a_{0,1},\ a_{0,2}\ldots a_{0,m}$$

$$a_{1,1},\ a_{1,2}\ldots a_{1,m}$$

$$a_{2,1},\ a_{2,2}\ldots a_{2,m}$$

und die korrespondierenden Koeffizienten jeder Ordnung, z.B. die konstanten Glieder $a_{0,1}, a_{0,2}\ldots a_{0,m}$ erneut durch eine Fitfunktion beschrieben. Es bleiben dann 3 Koeffizienten für jede der sekundären Fitfunktionen übrig. Das heißt, daß die gesamte Funktionenschar mittels 9 Koeffizienten beschrieben wird. Bei der Verwendung eines Polynoms 3.Grades würden 16 Koeffizienten ausreichen. Dadurch wird die Datenmenge zur Beschreibung des Ordnungsverlaufs erheblich reduziert. Außerdem sind die Funktionen $y_m(x)$ zuverlässiger, da Digitalisierungseffekte, Rauschen etc. durch den Fit minimiert wurden.

Bei der Bestimmung der Binning-Bereiche für die tatsächliche Messung werden die Bildelemente anteilig berücksichtigt, jedoch Spaltenweise diskret. Der Binningbereich stellt den Bereich zwischen zwei Minima dar und die Intensitätswerte werden entsprechend aufaddiert. Durch dieses Verfahren erhält man aus einer 2-dimensionalen Intensitätsverteilung I(x,y) eine Schar von eindimensionalen Spektren $I_m(x)$, wobei m die Ordnung bezeichnet.

Um die für die Spektroskopiker interessante Funktion I($\lambda$) zu erhalten, muß $I_m(x)$ kalibriert werden. Hierzu muß jeder Position x des gebinnten Spektrums eine Wellenlänge $\lambda$ zugeordnet werden. Gesucht ist also zunächst die Funktion $\lambda_m(x)$.

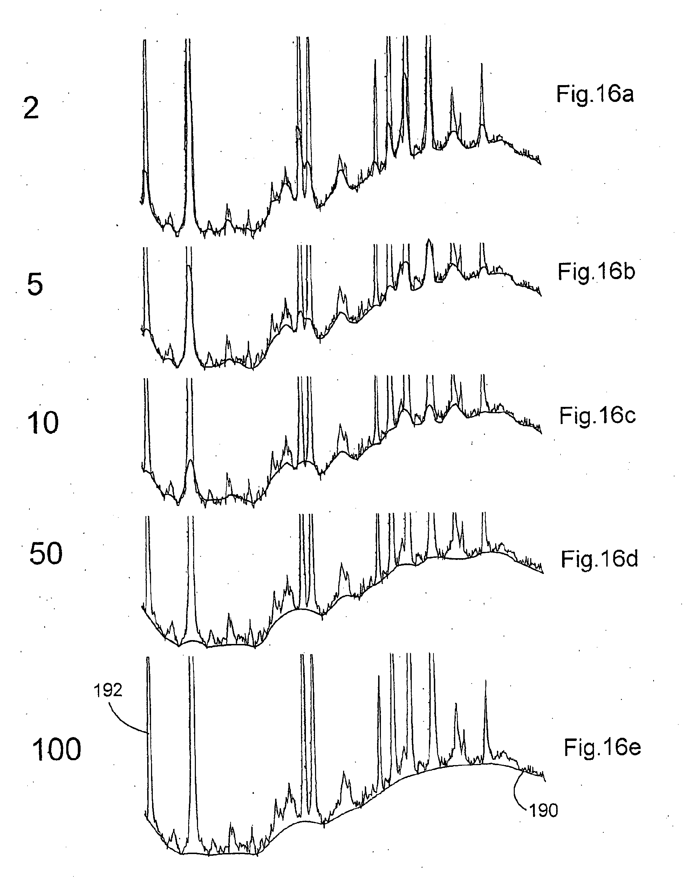

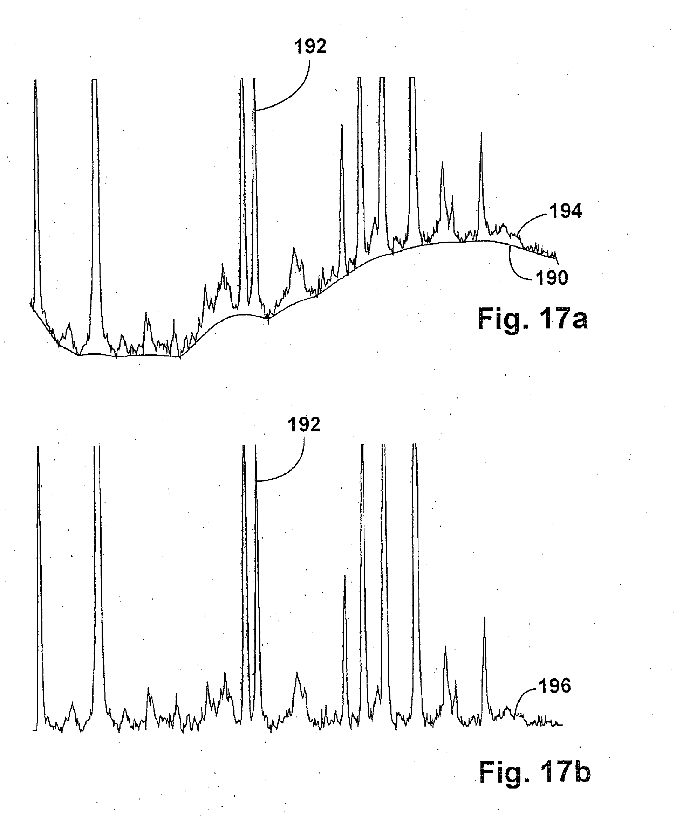

Die Kalibrierung erfolgt durch Vergleich des gemessenen Spektrums mit einem Referenzspektrum, das von einem Linienstrahler mit einer hohen Anzahl an Spektrallinien aufgenommen wurde. Ein Ausschnitt eines solchen Spektrums ist in Fig. 16 und in Fig. 17 dargestellt. Für den UV-Bereich zwischen 200 - 350 nm sind die Platinlinien besonders gut geeignet. Die Liniendaten liegen bereits als Datei (Atlas) vor. In dieser Datei sind die Wellenlängen der Linienschwerpunkte und die relativen Intensitäten gespeichert. Im Bereich zwischen 650 nm - 1000 nm eignen sich die Edelgaslinien von Pen-Ray-Lampen, bei denen die Spektren mit der Software aufaddiert wurden.

Das aufgenommene Spektrum muß zunächst bezüglich breitbandigem Untergrund korrigiert werden. In Fig. 16e ist der Untergrund mit 190 bezeichnet. Die Spektrallinien sind mit 192 bezeichnet. Der breitbandige Untergrund entsteht zum Beispiel durch Streulicht, nichtaufgelöste Rotations-Schwingungsbanden von Molekülen oder dergleichen.

Zur Untergrundkorrektur gibt es mehrere Verfahren. Üblicherweise wird der Untergrund zunächst bestimmt und dann vom ursprünglichen Spektrum subtrahiert. Zur Bestimmung des Untergrunds wird die Funktion $I_m(x)$ mit moving avarage geglättet. Das heißt, an jedem Punkt x wird die Intentsität I(x) durch den Mittelwert

$$\bar{I}(x) = \frac{\sum_{v}^{v_{max}} I(x_v)}{v_{max}}$$

ersetzt. Dabei entspricht die Breite $v_{max}$ des moving avarage etwa dem Doppelten einer Linienbreite. Wenn die durchschnittliche Linienbreite etwa 5 Pixel beträgt, so ist $v_{max} = 10$. Bei der geglätteten Funktion wird dann jeder Wert, bei dem der Wert der ursprünglichen Kurve über dem Wert der geglätteten Kurve liegt, auf den Wert der geglätteten Kurve gesetzt.

Im nächsten Schritt wird dann die auf diese Weise modifizierte Kurve erneut mit moving avarage geglättet. Auch nach dieser wiederholten Glättung der modifizierten Kurve wird die Kurve erneut modifiziert, indem die Werte, die über dem Wert der geglätteten Kurve liegen, auf den Wert der geglätteten Kurve gesetzt werden. Das Resultat der 2-fachen Glättung ist in Fig. 16 a dargestellt. Man erkennt, daß die Peaks schrumpfen, während der Rest der geglätteten Kurve sich gut an die ursprüngliche Kurve anschmiegt.

Der Prozess der Glättung und das Herabsetzen der Werte auf den Peaks wird 100 mal wiederholt. In Fig. 16b bis Fig.16e sind die ursprünglichen Werte und die Kurven mit 5-facher, 10-facher, 50-facher und 100-facher Wiederholung dargestellt. Am Ende spiegelt die geglättete Kurve den Wert der ursprünglichen Kurve ohne Peaks wieder, d.h. sie beschreibt den breitbandigen Untergrund.

In Fig. 17 a ist der Untergrund 190 und die ursprüngliche Kurve 194 mit Peaks 192 dargestellt. Im nächsten Schritt wird die Korrektur durchgeführt indem der Untergrund von der ursprünglichen Kurve subtrahiert wird. Die Differenzkurve 196 ist in Fig. 17 b dargestellt. Man erkennt, daß bis auf ein Rauschen nur noch Peaks 192 im Spektrum vorhanden sind. Die gebinnte und Untergrund-korrigierte Kurve wird dann zur weiteren Kalibrierung verwendet.

Zunächst wird ein Startwert bestimmt. Das ist eine Linie, die dem Spektroskopiker gut bekannt ist. Beispiele hierfür sind: Linien, die in mehreren Ordnungen auftauchen, Na-Doppellinie, Hg253 o.ä., die ein besonders markantes Profil haben oder dem Spektroskopiker sonst gut bekannt sind. Diesen bekannten ersten Linien wird die bekannte, genaue Wellenlänge sowie die bekannte Ordnungszahl $m_0$ zugeordnet.

Weiterhin werden alle Spektrallinien, deren Intensität einen vorgegebenen Wert überschreiten, ermittelt. Dies geschieht, indem zunächst ein Schwellwert festgelegt wird und das Maximum jeder Linie, die diesen Schwellwert überschreitet, ermittelt wird. Eine Spektrallinie wird dann angenommen, wenn die Linienflanken auf beiden Seiten des Maximums monoton bis auf einem Prozentsatz von 30% des Maximums abfallen. Für jede Linie, die dieses Kriterium erfüllt, wird dann die genaue Position des Schwerpunkts ermittelt, sowie die Intensität und Halbwertsbreite (in Pixeln) der Linie. Die Position (=x-Wert) des Schwerpunkts braucht dabei keine ganzzahlige Zahl zu sein.

Das Ergebnis dieser Prozedur ist ein Katalog von Referenzlinien, deren Position auf dem Detektor und Eigenschaften genau bekannt sind. Für die bekannten ersten Linien in einer bekannten ersten Ordnung (Startordnung) wird dann eine Wellenlängenskala ermittelt, indem die Wellenlängen $\lambda_i$ durch ein Polynom 2.Ordnung gefittet werden nach:

$$\lambda_m(x) = a_0(m_0) + a_1(m_0)x + a_2(m_0)x^2$$

Dabei ist es günstig, wenn die bekannte erste Ordnung in der Mitte des Spektrums liegt. Der Wert der Ordnung kann ermittelt werden aus den Nenndaten des Gitters. Diese Wellenlängenskala dient nun als Basis für die Berechnung einer vorläufigen Wellenlängenskala für die nächste benachbarten Ordnungen $m \pm 1$ nach

$$\lambda_{m\pm1}(x) = \lambda_m(x) \pm \Delta\lambda_{FSR} ,$$

mit dem "Freien Spektralbereich" $\Delta\lambda_{FSR} = \lambda_m(X)/m$. Die vorläufige Wellenlängenskala ist ausreichend, um die Referenzlinien, die in dieser Ordnung liegen, zu identifizieren. Die Wellenlängen der Referenzlinien werden aus der Datei mit den genauen Wellenlängen (Atlas) genommen und zugeordnet. Aus den Atlaswerten und den genauen Schwerpunktspositionen der Referenzlinien wird durch einen Polynom-Fit erneut eine genaue Wellenlängenskala ermittelt. Dabei werden nur solche Referenzlinien berücksichtigt, für die der Atlaswert mit der Schwerpunkt-Wellenlänge der vorläufigen Wellenlängenskala innerhalb eines vorgegebenen Toleranzbereichs übereinstimmt.

Aus diesem Fit wird erneut eine vorläufige Wellenlängenskala für die nächste Ordnung $m \pm 2$ bestimmt, mit der dann wiederum die Referenzlinien identifiziert werden. Auf diese Weise werden alle Ordnungen abgearbeitet, für die eine Wellenlängenskala ermittelt werden soll. Es ergibt sich eine komplette Zuordnung der Wellenlängen zu den Positionen. Bei dem Verfahren werden Linien mit schlechten Fitparametern durch falschen Atlaswert oder falsche Zuordnung nicht berücksichtigt. Die Auswahl der "schlechten" Linien kann von Hand oder automatisch erfolgen. Im letzteren Fall müssen Qualitätskriterien für die Fitparameter in Form von Toleranzen eingefügt werden.

Wenn die Wellenlängenskala für jede Ordnung bestimmt ist, bilden die Koeffizienten eine Matrix. Die korrespondierenden Koeffizienten zeigen eine Ordnungsabhängigkeit. Diese Ordnungsabhängigkeit kann wiederum durch eine Fitfunktion beschrieben werden. Dabei hat sich für die Fitfunktion der Koeffizienten der 0.Ordnung ein Polynom als geeignet erwiesen, welches die 1/m-Abhängigkeit mitberücksichtigt:

$$a_0(m) = a_{00}m^{-1} + a_{01}m + a_{02}m^2 + a_{03}m^3$$

$$a_1(m) = a_{10} + a_{11}m + a_{12}m^2 + a_{13}m^3$$

$$a_2(m) = a_{20} + a_{21}m + a_{22}m^2 + a_{23}m^3$$

Auf diese Weise kann die Wellenlängenfunktion $\lambda(x)$ mittels weniger Koeffizienten beschrieben und gespeichert werden. Das Spektrum $I(\lambda)$ ergibt sich dann nach $I(\lambda) = I(\lambda(x))$.

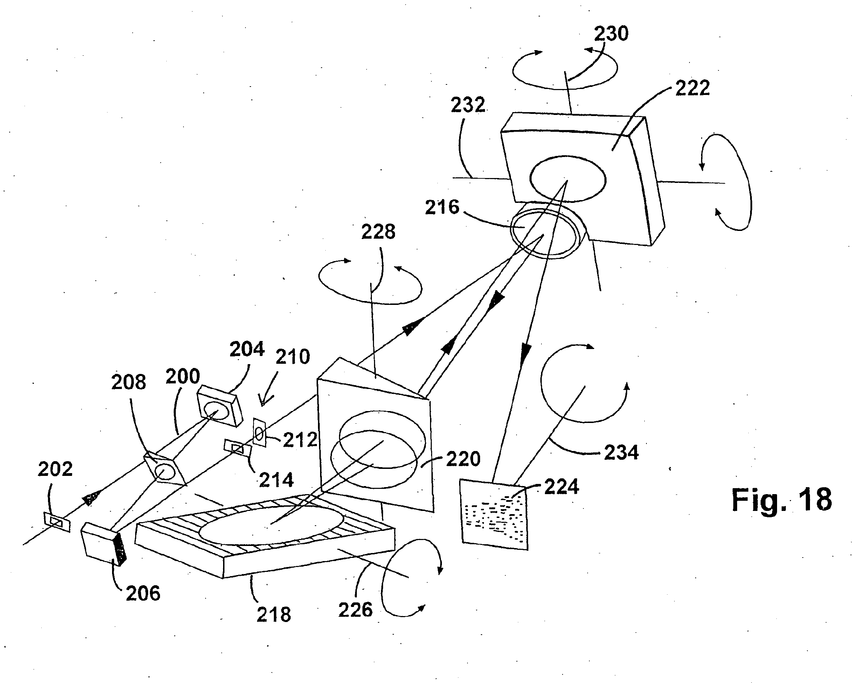

In Fig. 18 ist ein Echelle-Spektrometer nach einem weiteren Ausführungsbeispiel gezeigt Die Strahlung, repräsentiert durch ihre optische Achse 200 wird vor Eintritt in das Spektrometer vorzerlegt. Hierfür ist eine Anordnung bestehend aus einem Eintrittsspalt 202, UV-beschichteten Toroid-Spiegeln 204 und 206, sowie einem Prisma 208 vorgesehen. Die Strahlung tritt dann durch eine Eintrittsspaltanordnung 210 mit zwei gekreuzten, versetzt angeordneten Eintrittsspalten 212 und 214. Ein Kollimatorspiegel 216 in Form eines sphärischen Spiegels reflektiert das Bündel in Richtung auf das Echelle-Gitter 218. Zwischen Echelle-Gitter 218 und Kollimatorspiegel 216 ist ein Prisma 220 zur Querdispersion angeordnet. Nach der Dispersion am Gitter 218 durchtritt die Strahlung erneut das Prisma und fällt auf einen Kameraspiegel 222. Der Kameraspiegel 222 fokussiert das dispergierte Licht in der Austrittsebene 224.

Das Gitter ist um eine Achse 226 drehbar gelagert. Das Prisma ist um eine Achse 228 drehbar gelagert. Der Kameraspiegel ist um zwei Achsen 230 und 232 drehbar gelagert und der Detektor (nicht dargestellt) ist um eine Achse 234 drehbar gelagert. Durch diese Anordnung ist eine Justierung des Spektrums in der Austrittsebene in eine Referenzlage ähnlich wie im ersten Ausführungsbeispiel möglich.

**Patentansprüche**

1. Verfahren zur Wellenlängenkalibrierung von Echellespektren, bei denen sich die Wellenlängen auf eine Mehrzahl von Ordnungen verteilen, **gekennzeichnet durch** die Schritte

(a) Aufnehmen eines linienreichen Referenzspektrums mit bekannten Wellenlängen für eine Vielzahl der Linien,
(b) Bestimmen der Lage einer Vielzahl von Peaks des Referenzspektrums in dem aufgenommenen Spektrum,
(c) Auswählen von wenigstens zwei ersten Linien in einer bekannten Ordnung, mit bekannter Lage und Wellenlänge,
(d) Bestimmen einer Wellenlängenskala für die Ordnung, in welcher die bekannten Linien liegen, **durch** eine Fitfunktion $\lambda_m (x)$,
(e) Bestimmen einer vorläufigen Wellenlängenskala $\lambda_{m\pm1}(x)$ für wenigstens eine benachbarte Ordnung $m\pm1$ **durch** Addition/Subtraktion einer Wellenlängendifferenz $\Delta\lambda_{FSR}$, die einem freien Spektralbereich entspricht nach

$$\lambda_{m\pm1}(x) = \lambda_m (x) \pm \Delta\lambda_{FSR} \text{ , mit } \Delta\lambda_{FSR}=\lambda_m (x)/m$$

(f) Bestimmen der Wellenlängen von Linien in dieser benachbarten Ordnung $m\pm1$ mittels der vorläufigen Wellenlängenskala $\lambda_{m\pm1}(x)$,
(g) Ersetzen der vorläufigen Wellenlänge von wenigstens zwei Linien **durch** die nach Schritt (a) vorgegebene Referenzwellenlänge dieser Linien,
(h) Ermitteln einer genauen Wellenlängenskala aus den Referenzwellenlängen,
(i) Wiederholen der Schritte (d) bis (g) für wenigstens eine weitere benachbarte Ordnung.

2. Verfahren nach Anspruch 1, **dadurch gekennzeichnet, daß** das Referenzspektrum sich aus den Linenspektren mehrerer Referenzstrahler zusammensetzt.

3. Verfahren nach Anspruch 2, **dadurch gekennzeichnet, daß** die Referenzstrahler gleichzeitig in das Spektrometer eingekoppelt werden.

4. Verfahren nach Anspruch 3, **dadurch gekennzeichnet, daß** die Referenzspektren der Referenzstrahler nacheinander eingestrahlt und zu einem Referenzspektrum aufaddiert werden.

5. Verfahren nach einem der vorgehenden Ansprüche, **dadurch gekennzeichnet, daß** das Referenzspektrum die Edelgaslinien einer Pen-Ray-Lampe und/oder die Linien einer Platin-Hohlkathoden-Lampe umfasst.

6. Verfahren nach einem der vorgehenden Ansprüche, **dadurch gekennzeichnet, daß** das Referenzspektrum die Natrium-Doppellinie bei 583 nm und/oder die Hg-Linien bei 253 nm umfasst und diese als erste Linien bei Schritt (c) dienen.

7. Verfahren nach einem der vorgehenden Ansprüche, **dadurch gekennzeichnet, daß** vor Schritt (b) eine Untergrund-Korrektur bezüglich breitbandigem Untergrund durchgeführt wird.

8. Verfahren nach Anspruch 7, **dadurch gekennzeichnet, daß** die Untergrund-Korrektur die folgenden Schritte umfasst:

(a1) Glätten der aufgenommenen Spektralkurve
(a2) Bestimmen aller Werte der ursprünglichen Kurve, deren Wert über dem Wert der geglätteten Kurve liegt, und Reduzierung dieser Werte auf den Wert der geglätteten Kurve,
(a3) wenigstens zweifaches Widerholen der Schritte (a1) bis (a2),
(a4) Subtraktion der auf diese Weise erhaltenen Untergrundkurve von der ursprünglichen Kurve.

9. Echelle-Spektrometer mit einem Echelle-Gitter und einem weiteren Dispersionselement zur Ordnungstrennung der Ordnungen des Echelle-Spektrums quer zur Dispersionsrichtung des Echelle-Gitters, und einem Flächendetektor mit einer Vielzahl von Detektorelementen in der Austrittsebene des Spektrometers zur Erfassung des zweidimensionalen Echelle-Spektrums, **gekennzeichnet durch**

(a) einen Strahler und Mittel zum Einkoppeln von Licht dieses Strahlers in das Spektrometer, wobei der Strahler ein linienreiches Referenzspektrum mit bekannten Wellenlängen für eine Vielzahl von Linien emittiert,
(b) Mittel zur Durchführung der Verfahrensschritte (d) bis (h) in Anspruch 1, und
(c) Mittel zum Speichern und Wiedergeben von Referenzwellenlängen für das Linienspektrum.

10. Echelle-Spektrometer nach Anspruch 9, **dadurch gekennzeichnet, daß** einer der Strahler eine Pen-Ray-Lampe mit einer Vielzahl von Edelgaslinien oder eine Platin-Hohlkathoden-Lampe ist.

**Claims**

1. Method for calibrating echelle spectra wherein the wavelengths are distributed on a multiplicity of orders, **characterized by** the steps

    (a) detecting a reference spectrum having many lines with known wavelengths for a plurality of the lines,
    (b) determining the position of a plurality of peaks of the reference spectrum in the so detected spectrum,
    (c) selecting at least two first lines in a known order with a known position and wavelength,
    (d) determining of a wavelength scale for this order in which the known lines are positioned by a fitting function $\lambda_m(x)$,
    (e) determining a provisional wavelength scale $\lambda_{m+1}(x)$ for at least one adjacent order $m \pm 1$ by adding/subtracting a wavelength difference $\Delta\lambda_{FSR}$ corresponding to the free spectral range according to

$$\lambda_{m \pm 1}(x) = \lambda_m(x) \pm \Delta\lambda_{FSR}, \text{ with } \Delta\lambda_{FSR} = \lambda_m(x)/m$$

    (f) determining the wavelength of lines in this adjacent order $m \pm 1$ by means of the provisional wavelength $\lambda_{m \pm 1}(x)$,
    (g) replacing the provisional wavelength of at least two lines by the reference wavelength of these two lines according to step (a),
    (h) determining an exact wavelength scale from the reference wavelengths,
    (i) repeating steps (d) to (g) for at least one further neighbouring order.

2. Method according to claim 1, **characterized in that** the reference spectrum is formed from the line spectra of several reference light sources.

3. Method according to claim 2, **characterized in that** the reference light sources are simultaneously coupled into the spectrometer.

4. Method according to claim 3, **characterized in that** the reference spectrum of the reference light sources successively illuminate and are then added up to one reference spectrum.

5. Method according to any of the preceding claims, **characterized in that** the reference spectrum comprises the nobel gas lines of a Pen-Ray-lamp and/or the lines of a platinum-hollow cathode lamp.

6. Method according to any of the preceding claims, **characterized in that** the reference spectrum comprises the components of the sodium doublett at 583 nm and/or the Hg line at 253 nm, which are used as the first lines in step (c).

7. Method according to any of the preceding claims, **characterized in that** a background correction with respect to broadband background is carried out before the calibration in step (b).

8. Method according to claim 7, **characterized in that** the background correction comprises the following steps:

    (a1) smoothing of the recorded spectral graph,
    (a2) determining of all values in the initial graph having a value higher than the value of the smoothed graph and reducing such values to the value of the smoothed graph,
    (a3) repeating the steps (a1) to (a2) at least twice,
    (a4) subtracting the background graph obtained in such a way from the initial graph.

9. Echelle spectrometer with an echelle grating and a further dispersive element for separation of the orders of the echelle spectrum laterally to the dispersion direction of the echelle grating and a plane detector with a plurality of detector elements in the exit plane of the spectrometer for detecting the two dimensional echelle spectrum, **characterized by**

    (a) a light source and means for coupling light from this light source into the spectrometer, wherein the light source emits a reference spectrum with many lines of known wavelength for a plurality of lines,
    (b) means for carrying out the method steps (d) to (h) in claim 1, and
    (c) means for storing and displaying reference wavelengths for the line spectrum.

10. Echelle spectrometer according to claim 9, **characterized in that** one of the light sources is a Pen-Ray-lamp with a plurality of nobel gas lines or a platinum hollow cathode lamp.


**Revendications**

1. Procédé pour le calibrage de longueurs d'ondes de spectromètres échelle pour lesquels les longueurs d'ondes se répartissent sur plusieurs degrés, **caractérisé par** les étapes de

    (a) Recueillir un spectre de référence comportant beaucoup de lignes et de longueurs d'ondes connues pour de nombreuses lignes,
    (b) Détermination de la position de nombreux pics du spectre de référence dans le spectre recueilli,
    (c) Sélection d'au moins deux premières lignes situées dans un degré connu, de position et de longueur d'ondes connues,
    (d) Détermination d'une échelle de longueurs d'ondes pour le degré dans lequel se trouvent les lignes connues grâce à une fonction de fit $\lambda_m(X)$,
    (e) Détermination d'une échelle de longueurs d'ondes provisoire $\lambda_{m\pm1}(X)$ pour au moins un degré voisin $m\pm1$ par addition/soustraction d'une différence de longueurs d'ondes $\Delta\lambda_{FSR}$ correspondant à une plage spectrale libre d'après

$$\lambda_{m\pm1}(X)=\lambda_m(X)\pm\Delta\lambda_{FSR}, \text{ avec } \Delta\lambda_{FSR}=\lambda_m(X)/m$$

    (f) Détermination des longueurs d'ondes de lignes situées dans ce degré voisin $m\pm1$ au moyen de l'échelle de longueurs d'ondes provisoire $\lambda_{m\pm1}(X)$,
    (g) Remplacement de la longueur d'ondes provisoire d'au moins deux lignes par la longueur d'ondes de référence de ces lignes prédonnées par l'étape (a),
    (h) Calcul d'une échelle de longueur d'ondes exacte à partir des longueurs d'ondes de référence,
    (i) Réitération des étapes (d) à (g) pour au moins un autre degré voisin.

2. Procédé selon la revendication 1, **caractérisé en ce que** le spectre de référence se compose des spectres de lignes de plusieurs émetteurs de référence.

3. Procédé selon la revendication 2, **caractérisé en ce que** les émetteurs de référence sont couplés au spectromètre.

4. Procédé selon la revendication 3, **caractérisé en ce que** les spectres de référence des émetteurs de référence sont irradiés les uns après les autres et additionnés les uns aux autres sous forme de spectre de référence.

5. Procédé selon l'une quelconque des revendications précédentes, **caractérisé en ce que** le spectre de référence comprend les lignes de gaz rares d'une lampe à raie (pen ray) et/ou les lignes d'une lampe à cathode creuse de platine.

6. Procédé selon l'une quelconque des revendications précédentes, **caractérisé en ce que** le spectre de référence comprend la double ligne de sodium pour 583 nm et/ou les lignes de Hg pour 253 nm et que celles-ci servent de premières lignes pour l'étape (c).

7. Procédé selon l'une quelconque des revendications précédentes, **caractérisé en ce qu'**avant l'étape (b), une correction de fond concernant le fond à bandes larges est réalisée.

8. Procédé selon la revendication 7, **caractérisé en ce que** la correction de fond comprend les étapes suivantes :

(a1) Égalisation de la courbe de spectre recueillie,
(a2) Détermination de toutes les valeurs de la courbe d'origine dont la valeur est supérieure à la valeur de la courbe égalisée, et réduction de ces valeurs à la valeur de la courbe égalisée,
(a3) Deux réitérations et plus des étapes (a1) à (a2),
(a4) Soustraction de la courbe de fond ainsi obtenue de la courbe d'origine.

9. Spectromètre échelle muni d'un réseau échelle et d'un autre élément de dispersion destiné à séparer les degrés du spectre échelle diagonalement par rapport au sens de dispersion du réseau échelle, et d'un détecteur de surface muni de plusieurs éléments détecteurs situés dans le plan d'émergence du spectromètre afin de saisir le spectre échelle bidimensionnel, **caractérisé par**

(a) un émetteur et des moyens de coupler la lumière de cet émetteur dans le spectromètre, l'émetteur émettant un spectre de référence comprenant de nombreuses lignes ainsi que des longueurs d'ondes connues pour de nombreuses lignes,
(b) des moyens pour mettre en oeuvre les étapes de procédé (d) à (h) dans la revendication 1, et
(c) des moyens de mémorisation et de restitution des longueurs d'ondes de référence pour le spectre de lignes.

10. Spectromètre échelle selon la revendication 9, **caractérisé en ce que** l'un des émetteurs est une lampe à raie (pen ray) comprenant de nombreuses lignes de gaz rares ou une lampe à cathode creuse de platine.

FIG. 1

FIG. 2

Fig. 3

Fig.4

Fig. 5

EP 1 783 468 B1

Fig. 6

Fig. 7

Fig. 8

Fig. 9

Fig. 10

EP 1 783 468 B1

Fig. 11

EP 1 783 468 B1

Fig. 15

Fig. 12

**Fig. 14**

**Fig. 13**

2

Fig.16a

5

Fig.16b

10

Fig.16c

50

Fig.16d

192

100

Fig.16e

190

Fig. 17a

Fig. 17b

Fig. 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DD 260326

**In der Beschreibung aufgeführte Nicht-Patentliteratur**

- **S. FLOREK ; H. BECKER-ROß ; T. FLOREK.** Adaptation of an echelle spectrograph to a large CCD detector. *Fresenius J. Anal. Chem.,* 1996, vol. 355, 269-271